# FASCICULE DE BREVET EUROPEEN

(11) **EP 0 443 893 B1**
(45) Date de publication et mention de la délivrance du brevet: **04.08.1993**
(21) Numéro de dépôt: 91400226.6
(22) Date de dépôt: 31.01.1991
(51) Int. Cl.: F16D 65/56

(54) **Sous-ensemble de moteur de frein et procédé de réglage d'un tel sous-ensemble**
Untergruppe eines Bremsbetätigers und Verfahren zum Einstellen einer solchen Untergruppe
Subassembly of a brake actuator and procedure of adjusting such subassembly

(30) Priorité: 21.02.1990 FR 9002105
(43) Date de publication de la demande: 28.08.1991
(73) Titulaire: ALLIEDSIGNAL EUROPE SERVICES TECHNIQUES, 93700 Drancy (FR)
(72) Inventeur: Gérard, Jean-Louis, F-93700 Drancy (FR); Le Deit, Gérard, F-93700 Drancy (FR)
(74) Mandataire: Bentz, Jean-Paul

(56) Documents cités:
- EP-A- 0 242 240

## Description

La présente invention concerne un sous-ensemble de moteur de frein, plus particulièrement pour frein à disque, du type comprenant un piston de commande, destiné typiquement à être monté à coulissement étanche dans un alésage d'un corps de frein, comportant une cavité intérieure délimitée par une paroi de fond et, périphériquement, par un alésage étagé et comportant un dispositif d'actionnement mécanique agissant sur le piston de commande au travers d'un dispositif de rattrapage automatique constitué d'un dispositif à vis-écrou, destiné typiquement à être engagé en engrènement sur une broche filetée montée dans le corps de frein, sollicité vers la paroi du fond, via une rondelle et une butée axiale à billes par un organe élastique prenant appui sur le piston de commande à l'opposé, axialement, de la paroi de fond, et un piston pilote étagé, destiné à permettre une inhibition du rattrapage automatique en cas de pression d'actionnement excessive du piston de commande pour éviter un surréglage du moteur de frein, le piston pilote étagé comportant une première surface périphérique cylindrique extérieure de plus grand diamètre coopérant à coulissement étanche avec une extrémité de diamètre réduit de l'alésage étagé et, au voisinage de son extrémité opposée axialement à la première surface périphérique et coopérant en appui avec la rondelle, une seconde surface périphérique cylindrique de diamètre réduit coopérant à coulissement étanche avec un joint d'étanchéité annulaire associé à une rondelle de retenue placée en appui axial contre un épaulement s'étendant radialement vers l'intérieur entre la portion d'extrémité de plus petit diamètre et la portion intermédiaire de l'alésage étagé dans laquelle est monté le joint d'étanchéité annulaire.

Un sous-ensemble de moteur de frein de ce type est décrit dans EP-A-0 242 240. Dans le sous-ensemble décrit dans ce document, lorsque le piston pilote étagé est mis en oeuvre pour repousser la rondelle à l'encontre de l'organe élastique et interrompre ainsi la liaison d'entraînement entre le piston de commande et l'écrou de rattrapage automatique en cas de pression de freinage excessive, sous l'effet de cette pression de freinage, le piston pilote est déplacé, dans la direction opposée à la paroi de fond de la cavité intérieure du piston de commande jusqu'à une position où un épaulement radial du piston pilote vient porter sur un anneau coopérant avec un joint annulaire, ce qui interrompt le déplacement du piston pilote et évite l'écrasement de l'organe élastique sollicitant normalement l'écrou de rattrapage automatique.

Un tel sous-ensemble, bien que fonctionnant de façon tout à fait satisfaisante, présente néanmoins une dispersion de ses caractéristiques de fonctionnement dans une production en série. Cette dispersion est provoquée par les tolérances admises pour la fabrication des différents composants mécaniques et des joints annulaires, ce qui se traduit par des frottements différents au niveau des joints lorsque le sous-ensemble est soumis à la pression d'un fluide hydraulique, d'où il s'ensuit enfin que la neutralisation du rattrapage automatique intervient dans une plage de valeurs de la pression du fluide hydraulique très étendue.

La présente invention a donc pour objet d'obvier à ces inconvénients en proposant un agencement simple et efficace, totalement intégré, n'entraînant pas de surcoûts de fabrication, permettant de régler le point d'intervention d'un sous-ensemble de moteur de frein, c'est à dire de régler ce sous-ensemble pour que la neutralisation du rattrapage automatique intervienne à une pression prédéterminée du fluide hydraulique.

Pour ce faire, l'invention prévoit des moyens pour régler la sollicitation exercée par l'organe élastique sur le piston pilote à une valeur prédéterminée.

Selon une caractéristique de l'invention, le piston de commande est constitué d'une partie constituant la paroi de fond de la cavité intérieure et d'une partie constituant l'alésage étagé délimitant périphériquement la cavité intérieure.

Selon une caractéristique avantageuse de l'invention, la partie constituant la paroi de fond est filetée extérieurement et la partie constituant l'alésage étagé est taraudée intérieurement, et le réglage de la sollicitation exercée par l'organe élastique sur le piston pilote est obtenu par vissage ou dévissage de ces deux parties l'une sur l'autre.

La présente invention a également pour objet de prévoir un procédé de réglage d'un sous-ensemble de moteur de frein, qui soit de mise en oeuvre simple, rapide et fiable.

Pour ce faire l'invention prévoit un procédé de réglage d'un tel sous-ensemble qui comprend les étapes suivantes :
- on soumet le sous-ensemble de moteur de frein à l'action d'un fluide hydraulique sous une pression croissante,
- on détecte la pression Pᵢ du fluide hydraulique pour laquelle le sous-ensemble commence à absorber du fluide hydraulique et le piston pilote à reculer à l'encontre de la sollicitation de l'organe élastique,
- on règle la sollicitation de l'organe élastique pour que la pression Pᵢ du fluide hydraulique soit égale à une pression prédéterminée.

D'autres caractéristiques et avantages de la présente invention ressortiront de la description suivante d'un mode de réalisation, donné à titre illustratif, faite en relation avec les dessins annexés sur lesquels :
- la Figure 1 est une vue schématique en demi-coupe d'un mode de réalisation d'un sous-ensemble de moteur de frein selon l'invention, et
- la Figure 2 est une vue schématique en demi-coupe d'une variante du mode de réalisation du sous-ensemble de moteur de frein représenté sur la Figure 1.

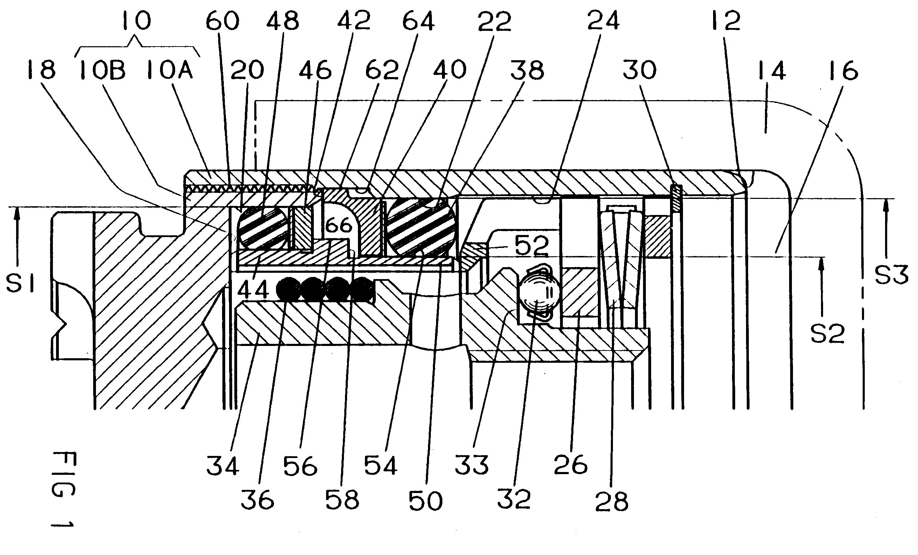

On reconnaît sur la Figure 1 un sous-ensemble de moteur de frein du type tel que décrit dans le document EP-A-0 242 240 sus-mentionné et comprenant un piston de commande 10, destiné à être monté à coulissement étanche dans un alésage 12 d'un corps de frein 14 définissant une chambre de pression 16 recevant un fluide hydraulique sous pression permettant de déplacer dans l'alésage 12 le piston de commande 10 pour l'actionnement d'au moins un élément de friction (non représenté) afin d'amener ce dernier en contact de friction avec un organe rotatif à freiner (non représenté). Dans la description qui suit, on appelle par convention "arrière" la partie du sous-ensemble la plus éloignée de l'élément de friction, et "avant" la partie en contact avec l'élément de friction. Sur la Figure, l'arrière se trouve donc à droite et l'avant à gauche.

Le piston de commande 10 est formé intérieurement avec une cavité interne délimitée par une paroi de fond 18 et, périphériquement, par un alésage étagé comprenant, au voisinage de la paroi de fond 18, une portion d'extrémité intérieure de diamètre réduit 20 se prolongeant par une portion intermédiaire de diamètre supérieur 22 se raccordant elle-même à une autre portion d'extrémité de plus grand diamètre 24. Dans cette portion d'extrémité de plus grand diamètre 24, est montée à coulissement une rondelle 26 sollicitée vers l'avant dans la direction de la paroi de fond 18 par un organe élastique 28, constitué par exemple par des rondelles Belleville, prenant un appui arrière sur un anneau de retenue 30 monté dans l'extrémité débouchante de la portion d'alésage de plus grand diamètre 24. La rondelle 26 coopère, via une butée axiale à billes 32, avec un épaulement arrière 33 d'un écrou de rattrapage automatique 34 associé à un ressort d'embrayage unidirectionnel 36, selon un agencement classique, l'écrou 34 étant destiné, lors de la mise en place du piston de commande 10 équipé dans l'alésage 12 du corps de frein, à coopérer en engrènement avec une broche filetée (non représentée) montée dans le corps de frein 14 et couplée typiquement à un dispositif d'actionnement mécanique du piston de commande 10. Dans la portion d'alésage intermédiaire 22 est disposé un joint d'étanchéité annulaire 38 associé à une rondelle de retenue 40 placée en appui axial contre un épaulement s'étendant radialement vers l'intérieur 42 entre la portion d'extrémité de plus petit diamètre 20 et la portion intermédiaire 22 de l'alésage étagé.

Dans la cavité du piston de commande 10 est disposé, coaxialement autour de l'écrou 34, un piston pilote 44 solidaire, du côté de la paroi de fond 18, d'une pièce présentant une première surface périphérique 46 cylindrique extérieure de plus grand diamètre coopérant à coulissement étanche, via un joint annulaire 48, avec la portion d'extrémité de plus petit diamètre 20 de l'alésage étagé, et une partie d'extrémité opposée d'épaisseur réduite 50, coopérant en contact d'engagement, au moyen d'une pièce intermédiaire annulaire 52, avec la rondelle 26 et présentant une surface périphérique cylindrique de diamètre réduit 54 coopérant à coulissement étanche avec le joint annulaire 38. Dans la position de repos représentée sur la Figure 1, le piston pilote 44 est plaqué en appui contre la paroi de fond 18 par la rondelle 26 sous l'effet de l'organe élastique 28. Le piston pilote 44 présentant, de part et d'autre, axialement, des surfaces annulaires différentielles S₁ et S₂ exposées à la pression de fluide dans la chambre de pression 16, avec S₁ supérieure à S₂, lorsque cette pression de fluide dépasse une valeur déterminée par le rapport de ces surfaces et par la force de l'organe élastique 28, le piston pilote 44 se déplace vers l'arrière à l'encontre de la force de l'organe élastique 28 pour écarter la rondelle 26 de l'épaulement arrière 33 de l'écrou 34 et empêcher ainsi que ce dernier ne subisse de la part de la rondelle 26, accompagnant - via l'organe élastique 28 - le déplacement du piston de commande 10, une poussée axiale se traduisant par une rotation de rattrapage de jeu de l'écrou 34 sur la broche filetée couplée au dispositif d'actionnement mécanique du moteur de frein.

Le piston pilote 44 comporte une portion intermédiaire présentant une surface périphérique cylindrique 56 de diamètre intermédiaire entre celui des surfaces périphériques 46 et 54 et se raccordant à cette dernière par un épaulement radial 58 susceptible de venir porter contre l'anneau 40 lors du déplacement vers l'arrière du piston pilote 44. Dans cette condition, correspondant à un écrasement limité de l'organe élastique 28, si la surface effective à la gauche du piston pilote 44 demeure la surface S₁, la surface effective offerte à la pression de fluide à la droite du piston pilote 44 n'est plus la surface S₂ mais, du fait du joint annulaire 38, la surface S₃, supérieure à S₁, telle que définie par le diamètre de la partie intermédiaire 22 de l'alésage étagé. Du fait de cette inversion du rapport des surfaces effectives soumises à la pression de fluide du piston pilote 44, le déplacement vers la droite de ce dernier est interrompu, le piston pilote 44 conservant cette position du fait que l'ensemble du joint annulaire 38 et de l'anneau de retenue 40 ne peut se déplacer vers la gauche en raison de l'épaulement 42. Dès que la pression d'actionnement dans la chambre 16 diminue, l'effet de pression différentiel sur le piston pilote 44 s'estompe et l'organe élastique 28 ramène la rondelle 26 et le piston pilote 44 vers la position de repos représentée sur la Figure.

Comme on l'a indiqué plus haut, les tolérances admises dans la fabrication des différents éléments composant le sous-ensemble, aussi bien dans les dimensions des composants mécaniques que dans la composition des joints, ont pour résultat que le fonctionnement d'un tel sous-ensemble peut intervenir dans une large plage de pressions hydrauliques d'un sous-ensemble à l'autre dans une fabrication en série.

Conformément à l'invention, cette plage de pressions où l'inhibition du réglage automatique intervient est réduite à son minimum en prévoyant un réglage de ce point d'intervention. Ce réglage est obtenu en faisant varier la sollicitation exercée par l'organe élastique 28 sur le piston pilote 44. Pour ce faire, le piston de commande 10 est réalisé en deux parties 10A et 10B. La première partie 10A est tubulaire et constitue les portions 22 et 24 de l'alésage étagé délimitant périphériquement la cavité intérieure du piston de commande. Son extrémité avant, tournée vers l'élément de friction (non représenté) est formée avec un taraudage intérieur 60 et reçoit par vissage la deuxième partie 10B, filetée extérieurement et constituant la paroi de fond 18 de la cavité intérieure du piston de commande. Cette deuxième partie 10B est formée avec un alésage borgne constituant la portion d'extrémité de diamètre réduit 20 de l'alésage étagé du piston de commande, et sa partie arrière, pénétrant dans la première partie 10A, forme l'épaulement 42 entre la portion de plus petit diamètre 20 et la portion intermédiaire 22 de l'alésage étagé. La rondelle de retenue 40 est formée avec un prolongement cylindrique 62 s'étendant axialement vers l'avant et situé dans une portion de plus grand diamètre 64 de l'alésage étagé, de sorte que ce prolongement 62 porte sur l'épaulement 42. De façon avantageuse grâce à ce mode de réalisation de l'invention, l'espace 66 situé entre le piston 44-46, l'alésage 22-64 et le joint d'étanchéité 38 est relié à l'atmosphère simplement entre les deux parties 10A et 10B au travers des interstices entre le taraudage 60 de la partie 10A et le filetage de la partie 10B.

On comprend ainsi que, grâce à l'invention, en vissant plus ou moins la partie 10B dans la partie 10A, on fait varier la position de l'épaulement 42 séparant les portions 20 et 64 de l'alésage étagé, et par conséquent la position de la rondelle de retenue 40. Le piston pilote 44 portant sur la paroi de fond 18, comprimera alors plus ou moins, via la pièce intermédiaire 52 et la rondelle 26, l'organe élastique 28. Il s'ensuit que la course du piston pilote 44 vers l'arrière, ayant lieu à l'encontre de la force exercée par l'organe élastique 28, laquelle est fonction de l'écrasement de cet organe élastique, commencera pour une valeur de la pression du fluide dans la chambre de pression 16 que l'on pourra ainsi ajuster de façon précise, pour tenir compte des tolérances de fabrication et des frottements des joints sous pression.

On a ainsi réalisé grâce à l'invention un sous-ensemble de moteur de frein dans lequel la neutralisation du rattrapage automatique est ajustable à la pression du fluide hydraulique désirée par des moyens simples et fiables, et sans surcoût de fabrication. Une fois ce point d'intervention réglé à la valeur voulue, il suffit de solidariser les pièces 10A et 10B ensemble, par exemple par sertissage, pour que le sous-ensemble conserve ses caractéristiques de fonctionnement.

Le réglage d'un tel sous-ensemble est réalisé de façon également très simple. Une fois le sous-ensemble assemblé, on le soumet à l'action d'un fluide hydraulique sous pression. Par une méthode classique, on mesure l'absorption du sous-ensemble, c'est à dire le volume de fluide hydraulique qu'il est nécessaire de fournir au sous-ensemble en fonction de la pression de ce fluide hydraulique. Lorsque la pression Pᵢ du fluide hydraulique atteint une valeur déterminée par le rapport des surfaces S₁ et S₂ et par la force de l'organe élastique 28, le piston pilote 44 commence à se déplacer vers l'arrière, et le sous-ensemble commence donc à absorber une certaine quantité de fluide hydraulique.

On comprend donc que grâce à l'invention, en vissant ou en dévissant la partie 10B dans la partie 10A, et donc, comme expliqué plus haut, en comprimant plus ou moins l'organe élastique 28, il est possible de provoquer le déplacement vers l'arrière du piston pilote 44 pour une valeur prédéterminée de la pression du fluide hydraulique, déplacement qu'on détecte par la mesure de l'absorption du sous-ensemble et on règle ainsi le point d'intervention du sous-ensemble de moteur de frein à la valeur prédéterminée de la pression du fluide hydraulique pour laquelle on désire que le rattrapage automatique soit neutralisé. Une fois le sous-ensemble de moteur de frein ainsi réglé, il ne reste plus qu'à solidariser les pièces 10A et 10B l'une sur l'autre pour que le sous-ensemble conserve le point d'intervention ainsi ajusté.

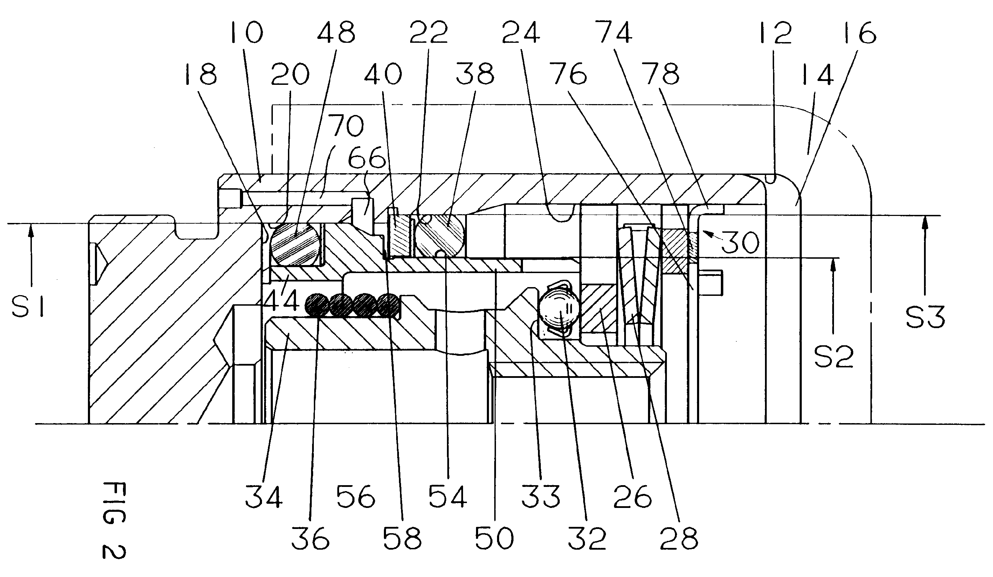

On a représenté sur la Figure 2 une variante du mode de réalisation de la Figure 1, où les mêmes éléments portent les mêmes références numériques. On voit sur la Figure 2 que le piston de commande 10 est réalisé en une seule partie. Un perçage 70 pratiqué dans le corps du piston de commande 10 relie l'espace 66 à l'atmosphère, et l'anneau de retenue 30 est constitué d'une partie plane en forme de disque 74 percé d'une ouverture centrale 76, relié par son bord périphérique extérieur à une partie cylindrique 78 s'étendant axialement vers l'arrière.

Selon cette variante de réalisation, la force exercée par l'organe élastique 28 déterminant, ainsi qu'on l'a vu précédemment, le début de la course du piston pilote 44 vers l'arrière, c'est-à-dire la valeur de la pression du fluide dans la chambre de pression 16 pour laquelle intervient la neutralisation du rattrapage automatique, est réglée facilement par l'ajustement de la position de l'anneau 30 dans l'alésage 24, par exemple par l'application par l'arrière d'une force prédéterminée sur l'anneau 30, à l'aide d'un outil approprié. On peut alors prévoir que l'anneau 30 soit emmanché à force par sa partie cylindrique 78 dans l'alésage 24 et reste dans la position ainsi déterminée. De préférence, on effectuera alors une soudure de l'anneau 30 dans l'alésage 24, par exemple à l'aide d'un laser, pour l'immobiliser dans cette position. On peut également prévoir de réaliser la partie cylindrique 78 avec un filetage extérieur coopérant avec un taraudage formé à l'extrémité arrière de l'alésage 24. Comme dans le mode de réalisation précédent, en vissant ou en dévissant l'anneau 30 dans l'alésage 24, on comprime plus ou moins l'organe élastique 28, et donc, comme on l'a expliqué, on règle le point d'intervention du sous-ensemble à la valeur voulue, par le même procédé que le celui qui a été décrit précédemment. L'anneau 30 pourra alors être solidarisé au piston de commande 10, par exemple par poinçonnage ou par une soudure, en particulier au laser.

Bien que la présente invention ait été décrite en relation avec un mode de réalisation particulier, elle ne s'en trouve pas limitée mais est au contraire susceptible de modifications et de variantes qui apparaîtront à l'homme de l'art. On pourra par exemple prévoir de régler le point d'intervention, ou la précontrainte de l'organe élastique 28, par un ajustement de la position de l'anneau de retenue 30 dans l'alésage 24, en réalisant la partie arrière du sous-ensemble définissant l'alésage 24 en deux parties vissées l'une sur l'autre. On pourra également prévoir de rendre le piston pilote 44 ou la pièce intermédiaire annulaire 52 de longueur réglable. De même, on pourra prévoir d'utiliser un fluide pneumatique au lieu d'un fluide hydraulique pour effectuer le réglage.

## Revendications

1. Sous-ensemble de moteur de frein comprenant un piston de commande (10) comportant une cavité intérieure délimitée par une paroi de fond (18) et, périphériquement, par un alésage étagé (20,22,24) et comportant un dispositif d'actionnement mécanique agissant sur le piston de commande au travers d'un dispositif de rattrapage automatique constitué d'un dispositif à vis-écrou (34) sollicité vers la paroi du fond, via une rondelle (26), et une butée axiale à billes (32), par un organe élastique (28) prenant appui sur un anneau (30) situé à l'extrémité du piston de commande opposée, axialement, à la paroi de fond et un piston pilote (44) comportant une première surface périphérique cylindrique de plus grand diamètre (46) coopérant en coulissement étanche avec une extrémité de diamètre réduit (20) de l'alésage étagé et, au voisinage de son extrémité (50) opposée axialement à la première surface périphérique (46) et coopérant avec la rondelle (26), une seconde surface périphérique de diamètre réduit (54) coopérant à coulissement étanche avec un joint d'étanchéité annulaire (38) associé à une rondelle de retenue (40) placée en appui axial contre un épaulement (42) s'étendant radialement vers l'intérieur entre la portion d'extrémité de plus petit diamètre (20) et la portion intermédiaire (22) de l'alésage étagé dans laquelle est monté le joint d'étanchéité annulaire (38), le piston pilote (44) étant sollicité vers la paroi du fond (18) via la rondelle (26) par l'organe élastique (28), caractérisé en ce que des moyens sont prévus pour régler la sollicitation exercée par l'organe élastique (28) sur le piston pilote (44) à une valeur prédéterminée.

2. Sous-ensemble selon la revendication 1, caractérisé en ce que le piston de commande est constitué d'une partie (10B) constituant la paroi de fond de la cavité intérieure et d'une partie (10A) constituant l'alésage étagé délimitant périphériquement la cavité intérieure.

3. Sous-ensemble selon la revendication 2, caractérisé en ce que la partie (10B) constituant la paroi de fond de la cavité intérieure est filetée extérieurement et la partie (10A) constituant l'alésage étagé est taraudée intérieurement (60).

4. Sous-ensemble selon la revendication 3, caractérisé en ce que le réglage de la sollicitation exercée par l'organe élastique (28) sur le piston pilote (44) est obtenu par vissage ou dévissage des parties (10B) constituant la paroi de fond et (10A) constituant l'alésage étagé l'une sur l'autre.

5. Sous-ensemble selon la revendication 2, caractérisé en ce que la partie (10B) constituant la paroi de fond de la cavité intérieure est formée avec un alésage borgne constituant la portion d'extrémité de diamètre réduit (20) de l'alésage étagé du piston de commande.

6. Sous-ensemble selon la revendication 5, caractérisé en ce que la partie arrière de la partie (10B) constituant la paroi de fond de la cavité intérieure forme l'épaulement (42) entre la portion de plus petit diamètre (20) et la portion intermédiaire (22) de l'alésage étagé.

7. Sous-ensemble selon la revendication 6, caractérisé en ce que l'espace (66) situé entre le piston pilote (44), la portion intermédiaire (22) de l'alésage étagé et le joint d'étanchéité annulaire (38) est relié à l'atmosphère au travers du taraudage (60) de la partie (10A) constituant l'alésage étagé.

8. Sous-ensemble selon la revendication 1, caractérisé en ce que le réglage de la sollicitation exercée par l'organe élastique (28) sur le piston pilote (44) est obtenu par l'ajustement de la position de l'anneau (30) dans l'alésage (24) du piston de commande (10).

9. Sous-ensemble selon la revendication 8, caractérisé en ce que l'ajustement de la position de l'anneau (30) dans l'alésage (24) du piston de commande (10) est effectué par l'application par l'arrière d'une force prédéterminée sur l'anneau (30).

10. Sous-ensemble selon la revendication 8, caractérisé en ce que l'ajustement de la position de l'anneau (30) dans l'alésage (24) du piston de commande (10) est effectué par vissage ou dévissage de l'anneau (30) dans l'alésage (24).

11. Procédé de réglage d'un sous-ensemble de moteur de frein selon l'une quelconque des revendications précédentes, caractérisé en ce qu'il comprend les étapes suivantes :
- on soumet le sous-ensemble de moteur de frein à l'action d'un fluide sous une pression croissante,
- on détecte la pression Pᵢ du fluide pour laquelle le sous-ensemble commence à absorber du fluide et le piston pilote (44) à reculer à l'encontre de la sollicitation de l'organe élastique (28),
- on règle la sollicitation de l'organe élastique (28) pour que la pression Pᵢ du fluide soit égale à une pression prédéterminée.

12. Procédé de réglage selon la revendication 11, caractérisé en ce que le réglage de la sollicitation de l'organe élastique (28) est obtenu par vissage ou dévissage des parties (10B) constituant la paroi de fond et (10A) constituant l'alésage étagé l'une sur l'autre.

13. Procédé de réglage selon la revendication 11, caractérisé en ce que le réglage de la sollicitation de l'organe élastique (28) est obtenu par l'ajustement de la position de l'anneau (30) dans l'alésage (24) du piston de commande (10).

14. Procédé de réglage selon la revendication 13, caractérisé en ce que l'ajustement de la position de l'anneau (30) dans l'alésage (24) est effectué par l'application par l'arrière d'une force prédéterminée sur l'anneau (30).

15. Procédé de réglage selon la revendication 13, caractérisé en ce que l'ajustement de la position de l'anneau (30) dans l'alésage (24) est effectué par vissage ou dévissage de l'anneau (30) dans l'alésage (24).

16. Procédé de réglage selon l'une des revendications 11 et 12, caractérisé en ce qu'il comprend de plus l'étape finale de solidarisation entre elles de la partie constituant la paroi de fond et de la partie constituant l'alésage étagé.

17. Procédé de réglage selon l'une des revendications 11 et 13 à 15, caractérisé en ce qu'il comprend de plus l'étape finale de solidarisation de l'anneau (30) au piston de commande (10).

## Claims

1. Brake motor subassembly comprising a control piston (10) having an internal cavity delimited by a base wall (18) and, at the periphery, by a stepped bore (20, 22, 24) and having a mechanical actuating device action on the control piston via an automatic compensation device formed by a screw-nut device (34) stressed towards the base wall, via a washer (26) and an axial thrust ball bearing (32), by a resilient member (28) supported on a ring (30) located at the end of the control piston axially opposite the base wall, and a pilot piston (44) having a first cylindrical peripheral surface of larger diameter (46) sealingly slideably cooperating with an end of reduced diameter (20) of the stepped bore and, in the vicinity of its end (50) axially opposite to the first peripheral surface (46) and cooperating with the washer (26), a second peripheral surface of reduced diameter (54) sealingly slideably cooperating with an annular seal (38) associated with a retaining washer (40) resting axially against a shoulder (42) extending radially towards the interior between the end portion of smaller diameter (20) and the intermediate portion (22) of the stepped bore in which the annular seal (38) is mounted, the pilot piston (44) being stressed towards the base wall (18) by the resilient member (28) via the washer (26), characterized in that means are provided for adjusting the stress exerted by the resilient member (28) on the pilot piston (44) to a predetermined value.

2. Subassembly according to Claim 1, characterized in that the control piston is made up of a part (10B) forming the base wall of the internal cavity and of a part (10A) forming the stepped bore peripherally delimiting the internal cavity.

3. Subassembly according to Claim 2, characterized in that the part (10B) forming the base wall of the internal cavity is externally threaded and the part (10A) forming the stepped bore is internally threaded (60).

4. Subassembly according to Claim 3, characterized in that the adjustment of the stress exerted by the resilient member (28) on the pilot piston (44) is obtained by screwing or unscrewing, one on the other, of the parts (10B) forming the base wall and (10A) forming the stepped bore.

5. Subassembly according to Claim 2, characterized in that the part (10B) forming the base wall of the internal cavity is formed with a blind bore forming the end portion of reduced diameter (20) of the stepped bore of the control piston.

6. Subassembly according to Claim 5, characterized in that the rear part of the part (10B) forming the base wall of the internal cavity forms the shoulder (42) between the portion of smaller diameter (20) and the intermediate portion (22) of the stepped bore.

7. Subassembly according to Claim 6, characterized in that the space (66) situated between the pilot piston (44), the intermediate portion (22) of the stepped bore and the annular seal (38) is connected to the atmosphere via the internal thread (60) of the part (10A) forming the stepped bore.

8. Subassembly according to Claim 1, characterized in that the adjustment of the stress exerted by the resilient member (28) on the pilot piston (44) is obtained by the setting of the position of the ring (30) in the bore (24) of the control piston (10).

9. Subassembly according to Claim 8, characterized in that the setting of the position of the ring (30) in the bore (24) of the control piston (10) is obtained by applying a predetermined force on the rear side of the ring (30).

10. Subassembly according to Claim 8, characterized in that the setting of the position of the ring (30) in the bore (24) of the control piston (10) is obtained by screwing or unscrewing of the ring (30) in the bore (24).

11. Process for adjusting a brake motor subassembly according to any one of the preceding claims, characterized in that it comprises the following steps:
- the brake motor subassembly is subjected to the action of a fluid under an increasing pressure,
- the pressure Pᵢ of the fluid at which the subassembly begins to absorb fluid and the pilot piston (44) begins to move back counter to the stressing of the resilient member (28), is detected,
- the stressing of the resilient member (28) is adjusted so that the pressure Pᵢ of the fluid is equal to a predetermined pressure.

12. Adjustment process according to Claim 11, characterized in that the adjustment of the stressing of the resilient member is obtained by screwing or unscrewing, one on the other, of the parts (10B) forming the base wall and (10A) forming the stepped bore.

13. Adjustment process according to Claim 11, characterized in that the adjustment of the stressing of the resilient member (28) is obtained by the setting of the position of the ring (30) in the bore (24) of the control piston (10).

14. Adjustment process according to Claim 13, characterized in that the setting of the position of the ring (30) in the bore (24) of the control piston (10) is obtained by applying a predetermined force on the rear side of the ring (30).

15. Adjustment process according to Claim 13, characterized in that the setting of the position of the ring (30) in the bore (24) of the control piston (10) is obtained by screwing or unscrewing of the ring (30) in the bore (24).

16. Adjustment process according to Claim 11 or Claim 12, characterized in that, in addition, it comprises the final step of fixing firmly together the part forming the base wall and the part forming the stepped bore.

17. Adjustment process according to one of Claims 11 and 13 to 15, characterized in that, in addition, it comprises the final step of fixing firmly together the ring (30) and the control piston (10).

## Patentansprüche

1. Untergruppe eines Bremsmotors mit einem Betätigungskolben (10), der einen inneren Hohlraum aufweist, der durch eine Bodenwand (18) und am Umfang durch eine gestufte Bohrung (20, 22, 24) begrenzt ist, einer mechanischen Betätigungsvorrichtung, die auf den Betätigungskolben über eine Selbsteinstellvorrichtung einwirkt, die durch eine Schrauben-Mutter-Vorrichtung (34) gebildet ist, die über eine Scheibe (26) und ein Axialkugellager (32) durch ein elastisches Organ (28) gegen die Bodenwand belastet ist, das sich an einem Ring (30) abstützt, der an dem Ende des Betätigungskolbens angeordnet ist, das der Bodenwand axial entgegengesetzt ist, und mit einem Steuerkolben (44), der eine erste zylindrische Umfangsfläche (46) größeren Durchmessers aufweist, die dicht gleitend mit einem Ende (20) verringerten Durchmessers der gestuften Bohrung zusammenarbeitet, und in der Nähe seines Endes (50), das der ersten Umfangsfläche (46) axial entgegengesetzt ist und mit der Scheibe (26) zusammenarbeitet, eine zweite Umfangsfläche (54) verringerten Durchmessers aufweist, die dicht gleitend mit einer Ringdichtung (38) zusammenarbeitet, der eine Rückhaltescheibe (40) zugeordnet ist, die axial an einer Schulter (42) anliegt, die sich zwischen dem Endteil (20) kleineren Durchmessers und dem Zwischenteil (22) der gestuften Bohrung, in der die Ringdichtung (38) vorgesehen ist, radial nach innen erstreckt, wobei der Steuerkolben (44) über die Scheibe (26) durch das elastische Organ (28) gegen die Bodenwand (18) belastet ist, dadurch gekennzeichnet, daß Mittel vorgesehen sind, um die durch das elastische Organ (28) auf den Steuerkolben (44) ausgeübte Belastung auf einen vorbestimmten Wert einzustellen.

2. Untergruppe nach Anspruch 1, dadurch gekennzeichnet, daß der Betätigungskolben durch einen die Bodenwand des inneren Hohlraums bildenden Teil (10B) und einen Teil (10A) gebildet ist, der die gestufte Bohrung bildet, die den inneren Hohlraum am Umfang begrenzt.

3. Untergruppe nach Anspruch 2, dadurch gekennzeichnet, daß der die Bodenwand des inneren Hohlraums bildende Teil (10B) mit einem Außengewinde versehen ist und daß der die gestufte Bohrung bildende Teil (10A) mit einem Innengewinde (60) versehen ist.

4. Untergruppe nach Anspruch 3, dadurch gekennzeichnet, daß die Einstellung der durch das elastische Organ (28) auf den Steuerkolben (44) ausgeübten Belastung durch ein Zusammenschrauben oder Auseinanderschrauben der Teile (10B, 10A) erhalten wird, die die Bodenwand bzw. die gestufte Bohrung bilden.

5. Untergruppe nach Anspruch 2, dadurch gekennzeichnet, daß der die Bodenwand des inneren Hohlraums bildende Teil (10B) mit einer Blindbohrung ausgebildet ist, die den Endteil (20) verringerten Durchmessers der gestuften Bohrung des Betätigungskolbens bildet.

6. Untergruppe nach Anspruch 5, dadurch gekennzeichnet, daß der hintere Teil des die Bodenwand des inneren Hohlraums bildenden Teils (10B) die Schulter (42) zwischen dem Teil (20) kleineren Durchmessers und dem Zwischenteil (22) der gestuften Bohrung bildet.

7. Untergruppe nach Anspruch 6, dadurch gekennzeichnet, daß der Raum (66) zwischen dem Steuerkolben (44), dem Zwischenteil (22) der gestuften Bohrung und der Ringdichtung (38) über das Innengewinde (60) des die gestufte Bohrung bildenden Teils (10A) mit der Atmosphäre verbunden ist.

8. Untergruppe nach Anspruch 1, dadurch gekennzeichnet, daß die Einstellung der durch das elastische Organ (28) auf den Steuerkolben (44) ausgeübten Belastung durch die Einstellung der Lage des Ringes (30) in der Bohrung (34) des Betätigungskolbens (10) erhalten wird.

9. Untergruppe nach Anspruch 8, dadurch gekennzeichnet, daß die Einstellung der Lage des Ringes (30) in der Bohrung (24) des Betätigungskolbens (10) durch die Beaufschlagung des Ringes (30) von hinten durch eine vorbestimmte Kraft bewirkt wird.

10. Untergruppe nach Anspruch 8, dadurch gekennzeichnet, daß die Einstellung der Lage des Ringes (30) in der Bohrung (24) des Betätigungskolbens (10) durch ein Einschrauben des Ringes (30) in die Bohrung (24) oder durch ein Herausschrauben dieses Ringes (30) bewirkt wird.

11. Verfahren zur Einstellung einer Untergruppe eines Bremsmotors nach einem der vorhergehenden Ansprüche, dadurch gekennzeichnet, daß es die folgenden Schritte enthält:
- man setzt die Untergruppe eines Bremsmotors der Wirkung eines Fluids unter zunehmendem Druck aus,
- man erfaßt den Druck Pᵢ des Fluids, bei dem die Untergruppe beginnt, das Fluid zu absorbieren, und der Steuerkolben (44) beginnt, sich entgegen der Belastung des elastichen Organs (28) zurückzubewegen,
- man stellt die Belastung des elastichen Organs (28) so ein, daß der Druck Pᵢ des Fluids gleich einem vorbestimmten Druck ist.

12. Einstellverfahren nach Anspruch 11, dadurch gekennzeichnet, daß die Einstellung der Belastung des elastischen Organs (28) durch ein Zusammenschrauben oder Auseinanderschrauben der Teile (10B, 10A) erhalten wird, die die Bodenwand bzw. die gestufte Bohrung bilden.

13. Einstellverfahren nach Anspruch 11, dadurch gekennzeichnet, daß die Einstellung der Belastung des elastischen Organs (28) durch die Einstellung der Lage des Ringes (30) in der Bohrung (24) des Betätigungskolbens (10) erhalten wird.

14. Einstellverfahren nach Anspruch 13, dadurch gekennzeichnet, daß die Einstellung der Lage des Ringes (30) in der Bohrung (24) durch eine Beaufschlagung des Ringes (30) von hinten durch eine vorbestimmte Kraft bewirkt wird.

15. Einstellverfahren nach Anspruch 13, dadurch gekennzeichnet, daß die Einstellung der Lage des Ringes (30) in der Bohrung (24) durch ein Einschrauben des Ringes (30) in die Bohrung (24) oder ein Herausschrauben dieses Ringes (30) bewirkt wird.

16. Einstellverfahren nach einem der Ansprüche 11 und 12, dadurch gekennzeichnet, daß es überdies den abschließenden Schritt enthält, wonach der die Bodenwand bildende Teil und der die gestufte Bohrung bildende Teil fest miteinander verbunden werden.

17. Einstellverfahren nach einem der Ansprüche 11 und 13 bis 15, dadurch gekennzeichnet, daß es überdies den abschließenden Schritt enthält, wonach der Ring (30) fest mit dem Betätigungskolben (10) verbunden wird.
